# EUROPEAN PATENT APPLICATION

(11) **EP 1 879 184 A1**
(43) Date of publication of application: **16.01.2008**
(21) Application number: 06731483.1
(22) Date of filing: 10.04.2006
(51) Int. Cl.: G11B 7/0025, G11B 7/135, G11B 25/02

(54) **RECORDING MEDIUM AND DRIVE FOR THE RECORDING REPRODUCING MEDIUM**

(30) Priority: 13.04.2005 JP 2005115259; 06.04.2006 JP 2006105238
(71) Applicant: ALPS ELECTRIC CO., LTD., Tokyo 145-8501 (JP)
(72) Inventor: SOMENO, Yoshihiro, ALPS ELECTRIC CO., LTD., Tokyo,145-8501 (JP); HAYASHI, Masamichi, ALPS ELECTRIC CO., LTD., Tokyo,145-8501 (JP)
(74) Representative: Klunker . Schmitt-Nilson . Hirsch
(86) International application number: PCT/JP2006/307536
(87) International publication number: WO 2006/112284

(57) **Abstract**

[Object] To provide a recording medium that is strong in deformation, easy to handle, excellent in portability, and inexpensive, and a recording-medium driving device thereof.

[Solving Means] When an end of a recording medium 10A inserted in an insertion hole 22 of the mounting portion 20, is screwed, a recording surface of the recording medium 10A (an outer peripheral surface of an outer cylindrical member 11) opposing a pickup 30A is moved in a peripheral direction. Therefore, data recorded on the recording medium 10A can be read out by the pickup 30A. The pickup 30 is only secured to a position opposing the recording surface of the recording medium 10, so that means for moving the pickup is not required. Therefore, an inexpensive recording-medium driving device having a simple structure can be provided.

## Description

### Technical Field

The present invention relates to a recording medium and a recording-medium driving device thereof. More particularly, the present invention relates to a recording medium which can have a relatively high storage capacity, which is conveniently portable, and which is strong in deformation; and a recording-medium driving device thereof.

### Background Art

Hitherto, as a non-contact type storage medium, for example, a disc storage medium, such as a CD or a DVD, is available. In addition, as a portable recording medium, for example, a recording medium using, for example, a semiconductor flash memory exists.

Since the disc storage medium is relatively inexpensive, it is also used as a storage medium when distributing, for example, a software sample. The storage medium using a flash memory is small, so that it has excellent portability.

However, the disc storage medium has a problem in that the disc itself tends to become deformed. From this viewpoint, when the disc storage medium uses a hologram recording method, wavelength modulation or angular modulation needs to be used when recording and reproducing data. In particular, in the case where a reflective type in which a laser light source and reproducing means are provided together at a recording surface side of the disc is used, when the disc is slightly deformed, the following problem occurs. That is, diffraction light, reflected at the recording surface of the disc, tends to be reflected diffusely. As a result, the data cannot be properly reproduced. Moreover, a disc surface is exposed, thereby making it easier for the disc surface to become scratched.

The storage medium using a flash memory needs to be handled carefully because it is expensive. In addition, in the flash memory, when the size of a memory chip is reduced in the future, a voltage that is to be applied to one cell interferes with an adjacent cell, causing data to break. Therefore, it is difficult to reduce the size and increase the storage capacity of the flash memory.

A cylindrical storage medium exists as a low-cost storage medium that is relatively strong in deformation and easy to handle. The source of the cylindrical storage medium is Edison's record. Cylindrical storage media are discussed in, for example, Patent Documents 1 and 2 below.

Patent Document 1: Japanese Unexamined Patent Application Publication No. 7-212796

Patent Document 2: Fig. 7 of Japanese Unexamined Patent Application Publication No. 2003-296941

### Disclosure of Invention

### Problems to be Solved by the Invention

However, the cylindrical recording media discussed in the aforementioned Patent Documents 1 and 2 are both built in an apparatus. Therefore, they have poor portability.

The one discussed in Patent Document 1 is provided for generating a three-dimensional moving image on a screen. Therefore, it does not include reproducing means for reading.

Patent Document 2 discusses a movable reading/writing device 82 being provided externally of a drum substrate 80. However, structural details are not set forth.

The present invention is for overcoming the above-described problems of the related art, and has as its object the provision of a cylindrical recording medium that is strong in deformation, inexpensive, and excellent in portability.

Another object of the present invention is to provide an inexpensive recording-medium driving device having a simple structure.

Still another object of the present invention is to provide a recording-medium driving device that is suitable for performing a recording operation or a reproducing operation on a cylindrical recording medium. Means for Solving the Problems

A cylindrical recording medium according to the present invention comprises an outer cylindrical member where an outer peripheral surface is formed, an inner cylindrical member where an inner peripheral surface is formed, and an optical recording material sealed between the outer cylindrical member and the inner cylindrical member. At least one of the outer cylindrical member and inner cylindrical member is formed of a material having optical transparency.

In the recording medium according to the present invention, since a recording surface is cylindrical, and a recording area can be made wide, the storage capacity can be increased.

In the recording medium, it is desirable that either one of the outer peripheral surface at the outer cylindrical member and the inner peripheral surface at the inner cylindrical member have a threaded portion.

Since the recording medium according to the present invention is cylindrical, compared to a disc recording medium, the cylindrical recording medium is strong in deformation and excellent in portability. In addition, compared to a semiconductor memory using a flash memory, the cylindrical recording medium can be such as to be easy to handle and inexpensive.

The present invention provides a recording-medium driving device that records data onto a cylindrical recording medium, having an externally threaded portion formed at an inner peripheral surface or an outer peripheral surface, or that reproduces the data recorded on the recording medium. The recording-medium driving device comprises a fitting portion including a threaded portion that is different from and that engages the externally threaded portion, and a pickup secured to a position opposing the inner peripheral surface or the outer peripheral surface of the recording medium.

In the invention, by only mounting the recording medium to the mounting portion, a recording operation or a reproducing operation can be performed using a simple structure without moving the pickup even if a non-contact type is used.

The present invention provides a recording-medium driving device comprising a pickup that records information onto a cylindrical recording medium, or that reproduces the information recorded on the recording medium; and a movable member where the pickup is mounted. A moving member that moves the movable member is provided at an inner portion or an outer portion of the recording medium.

The recording-medium driving device may further comprise a rotational driving member that rotates the recording medium in a peripheral direction.

In the recording-medium driving device, it is desirable that a plurality of the pickups that move along a recording surface of the recording medium be provided.

In the above-described means, a writing operation or a reading-out operation can be performed on the recording medium at a greater speed.

The rotational driving member may include a holding member that holds the recording medium, and a driving motor that rotates the holding member, in which case it is desirable that the driving motor be a stepping motor.

In the above-described means, since the pickup can be made to precisely oppose a recording position of the recording medium, a reproducing operation or a recording operation can be reliably performed. That is, it is possible to reduce the frequency with which a recording error or a reproducing error occurs.

For example, the pickup may include a light source that emits reference light, a beam expander that expands the size of the reference light, a light scanner including a mirror that adjusts an angle of incidence of the reference light with respect to a surface of the recording medium as a result of reflecting the reference light that has passed through the beam expander, a light-converging lens that converges the reflected reference light and transmits the converged reference light to the recording medium, and an image pickup member that reads information of reproduction light returning from the recording medium and that converts the reproduction light into an electrical signal.

The present invention provides a recording medium of a cartridge-type comprising a housing that accommodates the recording medium, a cover that covers one end surface of the housing, and a bottom portion that covers another end surface of the housing. The housing has a slit opposing a recording surface of the recording medium.

In the recording medium, since the recording surface (outer peripheral surface) is not directly exposed to the outside, the recording surface can be protected. Therefore, it is possible to reduce the occurrence of, for example, a recording error or a reproducing error.

It is desirable that, the cartridge-type recording medium be rotatably held in the housing. For example, the cover may be provided with a power transmission member that rotates the recording medium.

In the above-described means, it is possible to select only a portion the recording surface required for a recording operation and a reproducing operation.

Further, the present invention provides a recording-medium driving device for the cartridge-type recording medium. The recording-medium driving device comprises a pickup that records information onto the recording medium accommodated in the cartridge, or that reproduces the information recorded on the recording medium; and a moving member that moves the pickup in a predetermined movement direction. The pickup records the information onto or reproduces the information from the recording medium through a slit formed in the cartridge.

In the invention, it is possible to reliably perform a recording operation or a reproducing operation on the recording medium accommodated in the cartridge.

In the recording-medium driving device, for example, the pickup includes a light source that generates, at least, reference light, a beam expander that enlarges the reference light, a collimator lens that converts the reference light into parallel light, a mirror actuator that adjusts a tilting angle of a mirror and that sets an angle of incidence of the reference light with respect to the recording medium, a pinhole filter that intercepts unnecessary light among reproduction light that returns from the recording medium, and an image pickup member that reads the reproduction light, which has passed through the pinhole filter, and converts the reproduction light into an electrical signal.

In the above-described means, a reproducing-type recording-medium driving device can be provided.

The pickup may further include a spatial light modulator that generates data light including the information.

In the above-described means, a recording-medium driving device further having a recording function can be provided.

It is desirable that the recording-medium driving device further comprise a rotational driving member that rotates the recording medium at a predetermined angle pitch in a peripheral direction.

In the above-described means, a predetermined recording location, where information is provided on the recording medium, and the slit can oppose each other. Therefore, it is possible to reliably perform a reproducing operation or a recording operation.

### Advantages of the Invention

The present invention can provide an inexpensive recording medium strong in deformation, easy to handle, and excellent in portability; and a recording-medium driving device thereof.

The present invention can also provide a recording-medium driving device suitable for performing a recording operation or a reproducing operation on a cylindrical recording medium.

### Best Mode for Carrying Out the Invention

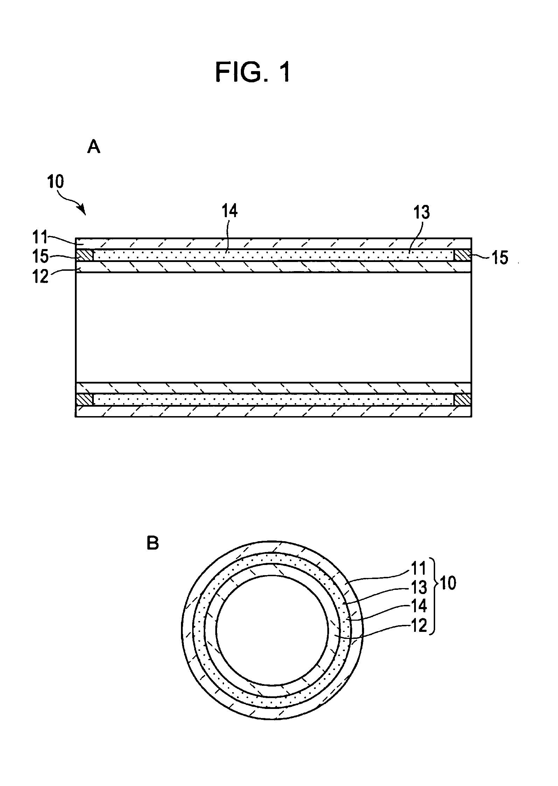

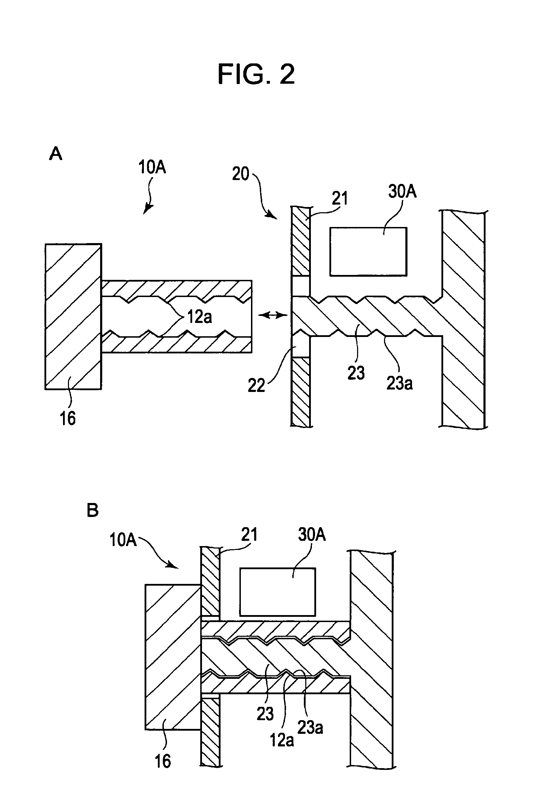

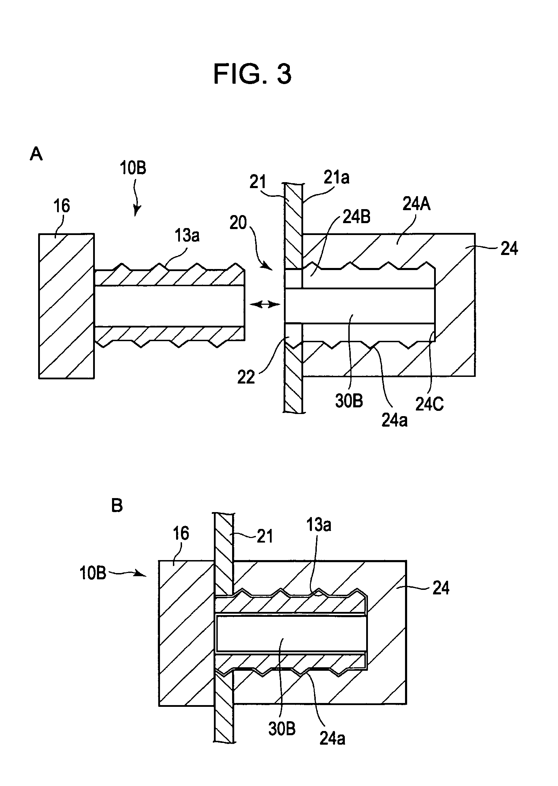

Fig. 1 shows a basic structure of a recording medium according to an embodiment of the present invention. Fig. 1A is a vertical sectional view of the recording medium, and Fig. 1 B is a horizontal sectional view of the recording medium. Fig. 2 shows a first practical form in which a cylindrical recording medium is used. Fig. 2A shows a state prior to mounting, and Fig. 2B shows a state after mounting. Fig. 3 shows a second practical form in which a cylindrical recording medium is used. Fig. 3A shows a state before mounting, and Fig. 3B shows a state after mounting.

As shown in Fig. 1, a recording medium 1 in the present invention has a cylindrical (drum) shape. The recording medium 10 has a double structure in which an outer cylindrical member 11, provided at an outer side, and an inner cylindrical member 12, provided at an inner side, are coaxially provided. At least one of the outer cylindrical member 11 and the inner cylindrical member 12 is formed of a material, such as glass or acryl, having optical transparency. A gap 13 is formed between the outer cylindrical member 11 and the inner cylindrical member 12, and is filled with an optical recording material 14. Sealing members 15 and 15 that prevent leakage of the optical recording material 14 are provided at respective ends of the recording medium 10 in the longitudinal direction. As the optical recording material 14, for example, a publicly known material, such as a photopolymer or a silver chloride material, can be used. Such optical recording material 14 is discussed in, for example, Japanese Unexamined Patent Application Publication No. 11-52824.

The recording medium 10 is a reflecting type. When one surface of a recording surface is irradiated at the same time with object light (data light) and reference light, which have the same wavelength, it is possible to form data as an interference pattern in the optical recording material 14, and to record the interference pattern. When the one surface of the recording medium 10 on which the interference pattern is recorded is irradiated with the reference light, reproduction light, which is diffracted by the interference pattern, is output at the one surface side. Therefore, capturing the reproduction light by an image pick-up member, such as a CCD or CMOS image sensor, makes it possible to read the data recorded on the recording medium 10.

A recording position of the recording medium 10 can be changed as a result of only changing the positions of the object light and reference light. At one recording position, multiplex recording of a plurality of data can be performed as a result of only changing the wavelengths of the object light and reference light or the angles of incidence of the object light and reference light with respect to the recording surface. A recording position on the recording medium is called a book, and a page is one in which one item of data is recorded with every wavelength or angle of incidence. For example, one page includes an information amount of approximately 20 KB (kilobytes), and one book includes an information amount of approximately 20 pages. The recording medium 10 has approximately 1000 of such books (recording positions). Therefore, one recording medium 10 has a storage capacity of approximately 400 MB (megabytes).

The capacity of the aforementioned page or the capacity of the aforementioned book will tend to increase in the future. Therefore, the recording medium 10 is expected to have capacities in giga units or in tera units in the future.

As with a memory card using a semiconductor flash memory, in this kind of recording medium 10, it is not necessary to directly perform transmission and reception of an electrical signal as a result of contacting it in conduction with an input/output terminal of a memory cell during a recording operation and a reproducing operation. Therefore, the problem that data tends to break when a chip size is reduced does not occur.

In a cylindrical recording medium 10A, which is shown as a first practical form in Figs. 2A and 2B, at least the outer cylindrical member 11, which becomes a recording surface side, is formed of a material having optical transparency, and an externally threaded portion 12a having a wide pitch is formed at an inner wall of the inner cylindrical member 12. A gripping portion 16 is integrally formed with one end of the recording medium 10A.

In a cylindrical recording medium 10B, which is shown as a second practical form in Figs. 3A and 3B, at least the inner cylindrical member 12, which becomes a recording surface side, is formed of a material having optical transparency, and an externally threaded portion 13a is formed at an outer peripheral surface of the outer cylindrical member 11. A gripping portion 16 is integrally formed with one end of the recording medium 10B.

The size of each of the recording media 10A and 10B is such that, for example, the outside diameter of the outer cylindrical member 11 is within 5 mm, and the length thereof is within 2 cm, so that each recording medium is highly portable. Since the recording medium 10A of the first practical form has a structure in which a hand of a person or other objects tend to directly contact the outer cylindrical member 11, it is necessary to reduce the number of opportunities that the outer-peripheral-side recording surface is scratched. Therefore, it is desirable that, like lipstick, the recording medium 10B be carried around while being accommodated in a protecting external case. In contrast, since the recording medium 10B of the second practical form generally has a structure in which the inner portion of the recording medium 10B cannot be easily contacted from the outside, the inner wall (recording surface) of the inner cylindrical member 12 is not easily scratched. However, since it is necessary to prevent the entry of dust into the recording medium 10B, it is desirable to cover the recording medium 10B with an external case as in the first practical form.

The recording medium 10A is mounted to a mounting portion 20, provided at, for example, a front surface, a rear surface, or a side surface of an electronic apparatus, such as a computer, shown in, for example, Fig. 2A and Fig. 3A. The mounting portion 20 includes a panel surface 21 and an insertion hole 22 formed in the panel surface.

In the first practical form shown in Figs. 2A and 2B, a fitting portion 23, to which the recording medium 10A is fitted, is provided in the insertion hole 22. The fitting portion 23 has a protruding form, and has an external dimension that is slightly smaller than the inside diameter of the recording medium 10A. An internally threaded portion 23a is formed at an outer peripheral surface of the fitting portion 23.

More specifically, as shown in Fig. 2B, the recording medium 10B can be mounted to the mounting portion 20 by screwing the recording medium 10A to the mounting portion 20 while turning the recording medium 10A in, for example, a clockwise direction.

A pickup 30A is secured within the mounting portion 20 and at a position opposing the fitting portion 23. When the recording medium 10A is mounted to the mounting portion 20, a predetermined gap is formed between the pickup 30A and the outer peripheral surface of the outer cylindrical member 11 of the recording medium 10A.

In the second practical form shown in Figs. 3A and 3B, a cylindrical fitting portion 24 is secured to a back surface 21a of the panel surface 21. An internally threaded portion 24a, which engages the externally threaded portion 13a of the recording medium 10B, is formed in an inner wall 24A of the fitting portion 24, and an open end 24B thereof opposes the insertion hole 22. More specifically, as shown in Fig. 3B, the recording medium 10B can be mounted to the mounting portion 20 by screwing the recording medium 10B to the mounting portion 20 while turning the recording medium 10B in, for example, a clockwise direction.

A circular cylindrical pickup 30B, which extends from a bottom portion 24C of the fitting portion 24 to the open end 24B, is provided at the bottom portion 24C of the fitting portion 24. The pickup 30B is secured in a hollow state at locations situated at equal distances and towards the center from the inner wall 24A. Predetermined gaps are formed between the pickup 30B and the inner walls of the inner cylindrical member 12 of the recording medium 10B even when the recording medium 10B is mounted in the mounting portion.

In the first and second practical forms, the longitudinal pitches of the internally threaded portions and the externally threaded portions are both wide, so that the recording media can be easily mounted by, for example, only two rotations.

Each of the pickups 30A and 30B includes a Vertical Cavity Surface-Emitting Laser (VCSEL) that functions as a light source that generates, for example, reference light (laser light), a beam expander that expands the size of the reference light, a light scanner that includes a mirror that adjusts the angle of incidence of the reference light with respect to the surface of the recording medium 10 as a result of reflecting the reference light that has passed through the beam expander, a light-converging lens that converges the reflected reference light and transmits it to any point on the recording medium 10, and an image-pickup member that reads information of reproduction light (diffraction light) diffracted by and returning from the recording medium 10, and that converts it into an electrical signal.

When, while an end of the recording medium 10 is being inserted in the insertion hole 22 of the mounting portion 20, the gripping portion 16 is rotated clockwise, in the first practical form, the recording medium 10A can be mounted to the mounting portion 23, and, in the second practical form, the recording medium 10B can be mounted to the mounting portion 24.

Here, in the first practical form, a recording surface of the recording medium 10A (outer peripheral surface of the outer cylindrical member 11) is moved in a peripheral direction while it opposes the pickup 30A. In the second practical form, a recording surface of the recording medium 10B (inner peripheral surface of the inner cylindrical member 12) is mounted in a peripheral direction while it opposes the pickup 30B.

Therefore, in both forms, the pickup 30 (30A or 30B) can be read out data that is recorded. In particular, since the speed with which the recording medium 10 is rotated by a person is lower than when, for example, it is rotated by a motor, any items of data recorded in respective recording positions (books) on the recording medium 10 can be reliably read out with every page.

In each of the first and second practical forms, the pickup 30 only needs to be secured to a position opposing the recording surface of the recording medium 10, so that means for moving the pickup 30 is not required. Therefore, it is possible to provide a recording-medium driving device that is inexpensive and has a simple structure.

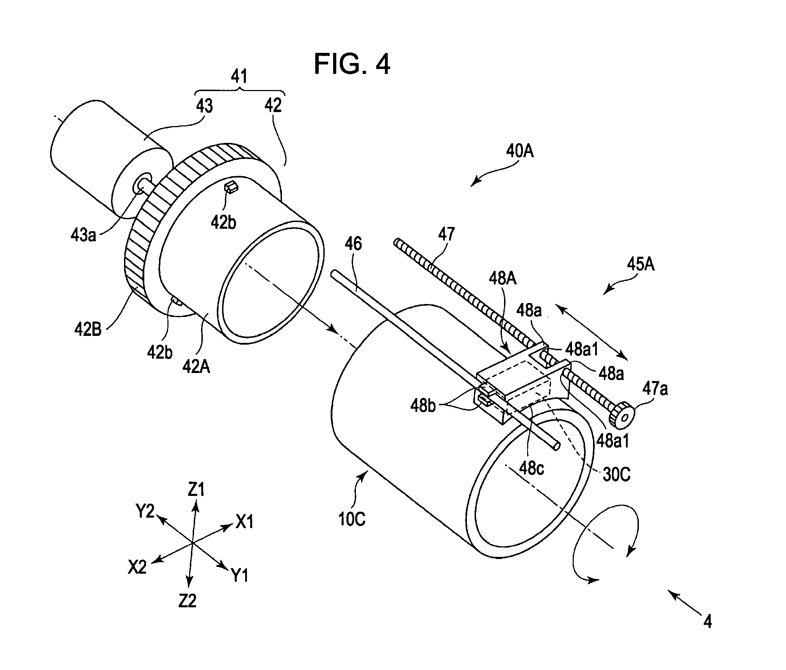

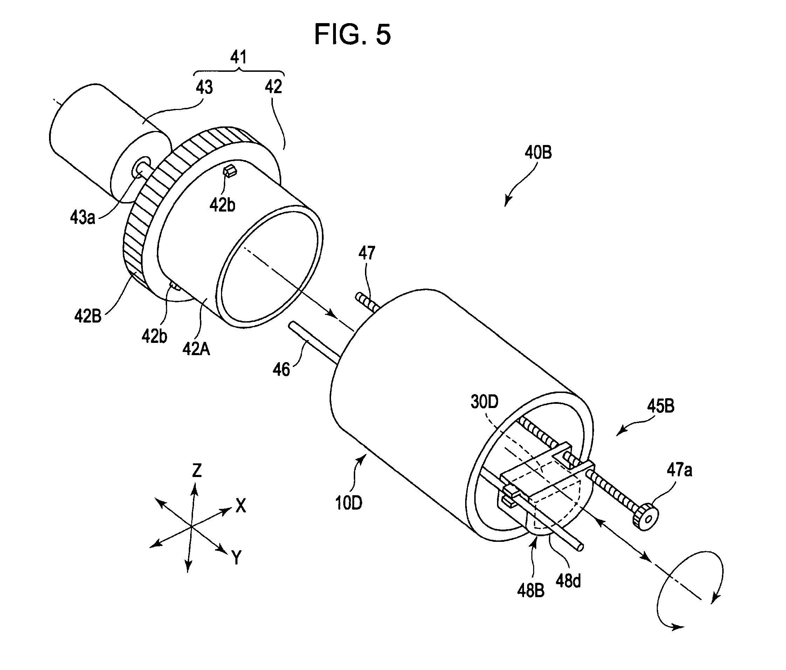

Fig. 4 is a perspective view of a recording-medium driving device of a first embodiment according to the present invention, and Fig. 5 is a perspective view of a recording-medium driving device of a second embodiment of according to the present invention.

The recording-medium driving devices shown in Figs. 4 and 5 are each installed in an electronic apparatus, such as an external storage apparatus or a computer body.

A recording-medium driving device 40A shown in Fig. 4 includes a rotational driving member 41, which rotates a recording medium 10C, and a moving member 45A, which moves the pickup along the recording surface of the recording medium 10.

The recording medium 10C has a structure that is the same as that of the recording medium 10 shown in Fig. 1, except that its recording surface is provided at an outer peripheral surface side.

The rotational driving member 41 includes a holding member 42, which holds the recording medium 10, and a driving motor 43, which applies rotational force to the holding member 42. The holding member 42 has a holding cylindrical portion 42A, which is inserted into an inner cylindrical member 12 of the recording medium 10C and which holds the inner wall of the recording medium 10C, and has a base 42B. As shown in Fig. 4, when several protruding locks 42b that can move forward and retreat radially are provided at a Y2 side of the holding cylindrical member 42A, and are fitted to recesses provided in the inner peripheral surface of the inner cylindrical member 12 of the recording medium 10C, the recording medium 10C can be reliably held in a positioned state, from which viewpoint, this structure is desirable.

The driving motor 43 is a stepping motor, and its driving shaft 43a supports the center of the bottom surface of the base 42B of the holding member 42. In the rotational driving member 41, when the driving motor 43 is driven, the recording medium 10C, held by the holding member 42, can be intermittently or continuously rotated at a predetermined pitch angle in a peripheral direction.

The moving member 45A has a guide shaft 46, a screw shaft 47, and a movable member 48A. The guide shaft 46 and the screw shaft 47 are disposed parallel to each other in an electronic apparatus, and the screw shaft 47 is rotatably supported. A gear 47a is secured to an end of the screw shaft 47, and a driving shaft of a driving motor (not shown) is directly or indirectly connected to the gear 47a. Since, when the driving motor rotates, driving force thereof is transmitted to the gear 47a through the driving shaft, the screw shaft 47 and the gear 47a rotate together.

The movable member 48A has a pair of first supporting portions 48a and 48a, which protrude in an illustrated X1 direction and which oppose each other in parallel in a Y direction, and a pair of second supporting portions 48b and 48b, which protrude in an illustrated X2 direction and which are oppose each other in parallel in a Z direction.

Through holes 48a1 and 48a1 having internally threaded portions at the inner surfaces thereof are formed in the first supporting portions 48a and 48a so as to pass therethrough in the illustrated Y direction. The screw shaft 47 is inserted into the through holes 48a1 and 48a1, and the internally threaded portions of the through holes 48a1 and 48a1 engage an externally threaded portion of the outer peripheral surface of the screw shaft 47. The guide shaft 46 is provided between the second supporting portion 48b and the second supporting portion 48b.

That is, the movable member 48A is supported by the guide shaft 46 and the screw shaft 47 at both ends in the X direction. When the screw shaft 47 is rotated, its driving force is transmitted from the externally threaded portion of the screw shaft 47 to the internally threaded portions of the first supporting portions 48a and 48a, so that the movable member 48A is moved in the illustrated Y1 and Y2 directions. That is, the guide shaft 46 and the screw shaft 47 constitute the moving member 45A that moves the movable member 48A in a longitudinal direction (Y direction) of the recording medium 10C. The lower surface (Z2-side surface) of the movable member 48A is formed by an arc recess 48c facing the outer peripheral surface of the recording medium 10C.

A pickup 30C having the same structure as those shown in Figs. 2A and 2B and 3A and 3B is mounted to the movable member 48A. An image pickup member and a light-converging lens (not shown), provided at the pickup 30C, are disposed so as to oppose a recording surface (outer peripheral surface) of the recording medium 10C through the recess 48c of the movable member 48A. Therefore, when the moving member 45A is driven, the light-converging lens and the image pickup member (not shown) can move in the illustrated Y direction while opposing the recording surface (outer peripheral surface) of the recording medium 10C.

A recording-medium driving device 40B shown in Fig. 5 has a structure that is substantially the same as that of the recording-medium driving device 40A. It differs significantly in the following way. That is, a recording medium 10D has a recording surface provided at the inner wall of an inner cylindrical member 12, and a moving member 45B including a guide shaft 46, a screw shaft 47, and a movable member 48B is movably provided in the inner portion of the inner cylindrical member 12 of the recording medium 10D. The bottom surface of the movable member 48B is formed in an arc shape and by a protruding surface 48d. An image pickup member and a light-converging lens (not shown), provided at a pickup 30D, where the movable member 48 is mounted, are disposed so as to oppose the recording surface (inner peripheral surface) of the recording medium 10D through the protruding surface 48d. Therefore, when the moving member 45B is similarly driven, the light-converging lens and the image pickup member (not shown) can move in the illustrated Y direction while opposing the recording surface (inner peripheral surface) of the recording medium 10D.

In the recording-medium driving device 40 (40A or 40B) shown in Figs. 4 and 5, when the recording medium 10 (10C or 10D) is rotated by a predetermined angle as a result of driving the driving motor 43, for example, each recording position (book), recorded at the recording medium 10 at a predetermined pitch in the peripheral direction, can oppose the light-converging lens and the image pickup member (not shown). In addition, while a recording position is opposing the light-converging lens and the image pickup member, in the pickup 30 (30C or 30D), the angle of a mirror of a light scanner, provided in the interior thereof, is changed to scan all pages exiting at the recording position, and to read out data recorded on each page.

Next, in the recording-medium driving device 40, the recording medium 10 is rotated by one pitch angle to cause the light-converging lens and the image pickup member (not shown) to oppose a next adjacent recording position (book) in the peripheral direction, so that, similarly, all pages existing at the recording position are scanned to read out data recorded on each page.

Then, when reproduction for one rotation of recording on the recording medium 10 is completed, the movable member (48A or 48B) is moved in the Y direction to make the pickup oppose a recording position (book), which is a position of a next adjacent column in the longitudinal direction. Similarly to the above, by driving the pickup 30 while rotating the recording medium 10 at a pitch angle, data in each recording position provided in that column can be read out.

In the case where a book (recording position) is recorded so as to be spirally formed at the outer peripheral surface or the inner peripheral surface of the recording medium 10, when an attempt is made to synchronize movement of the movable member 48 in the Y direction and rotation of the recording medium 10 in the peripheral direction at a predetermined pitch angle, items of data recorded according to pages in the book can be continuously read out.

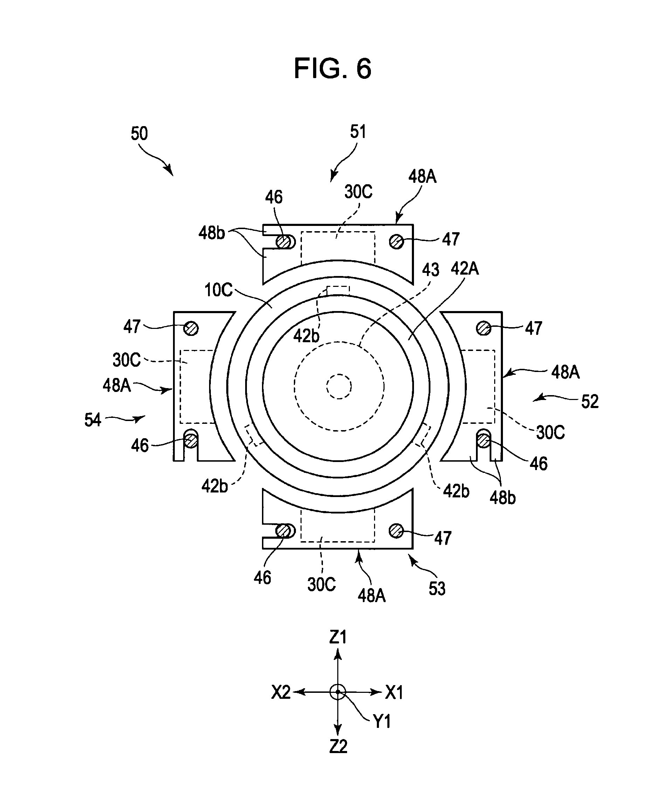

Fig. 6 is a front view of an example of an application of the recording-medium driving device shown in Fig. 4 as viewed from the direction of arrow 4 in Fig. 4.

A recording-medium driving device 50 shown in Fig. 6 is provided with four moving members, that is, moving members 51, 52, 53, and 54. Each moving member has a structure that is similar to the moving member, shown in Fig. 4, including the guide shaft 46, the screw shaft 47, and the movable member 48A.

The moving members 51, 52, 53, and 54, or the movable members 48A, are supported so as to be independently movable in the Y direction. Therefore, for example, each of the moving members 51, 52, 53, and 54, and each pickup 30C may be in charge of 1/4 of a periphery in the peripheral direction, or 1/4 of an area in the longitudinal direction. In this case, since a reading-out area that one pickup 30 is in charge of can be reduced, an overall reading-out time of the recording-medium driving device 50 can be reduced. That is, it is possible for the recording-medium driving device 50 to have a high reading-out speed.

Although, in each embodiment, a description is given primarily with reference to a reproducing apparatus, the present invention is not limited thereto. Accordingly, a recording device, or a recording-medium driving device including both a recording device and a reproducing device may be used.

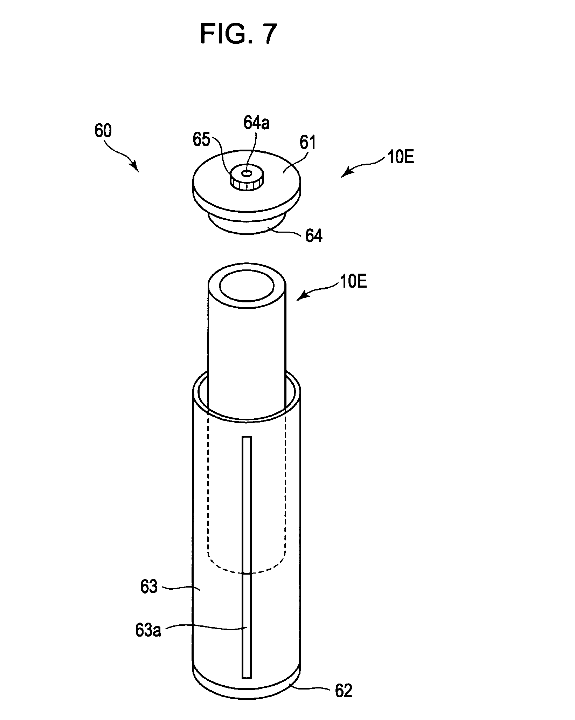

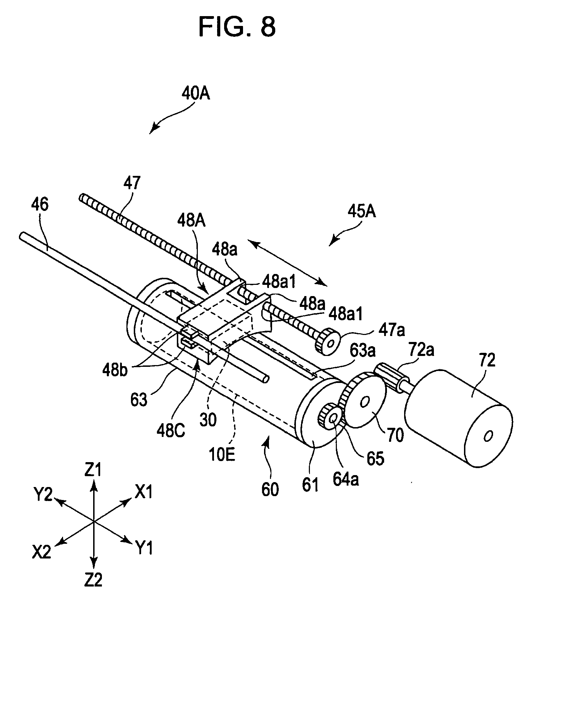

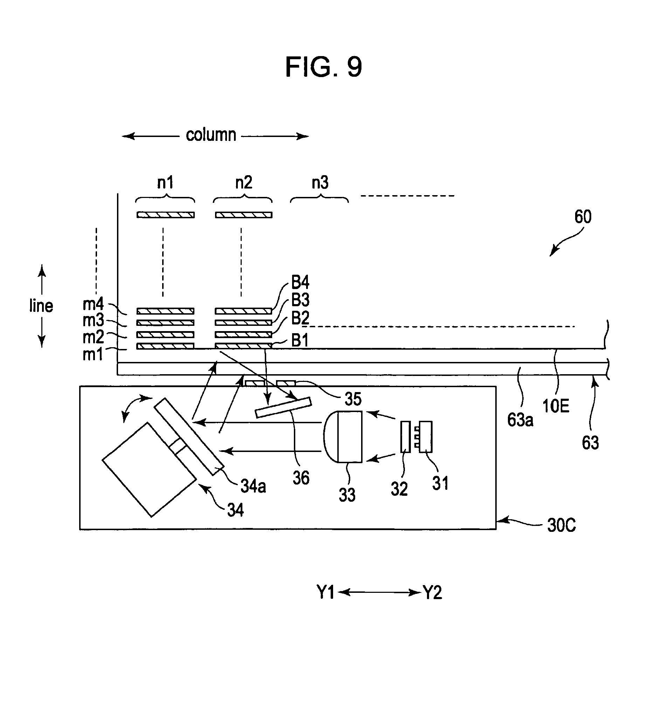

Fig. 7 is an exploded perspective view of a cartridge recording medium serving as an example of an application of a cylindrical recording medium, Fig. 8 is a perspective view of the recording medium shown in Fig. 7 and a recording-medium driving device thereof, and Fig. 9 is a schematic view of an internal structure of a pickup.

In a cylindrical recording medium 10E shown in Fig. 7, similarly to the recording medium 10C, a recording surface is provided at an outer peripheral surface side. However, the recording medium 10E differs from the recording medium 10C having a directly exposed recording surface in that the recording medium 10E is accommodated in a cartridge 60.

The cartridge 60 has a cover 61 covering one end, a bottom portion 62 covering the end, and a housing 63 provided between the cover 61 and the bottom portion 62. The housing 63 of this practical form is cylindrical, and has one slit 63a in one side surface so as to extend in the longitudinal direction. In this cartridge 60, a recording surface of the recording medium 10E, provided in the cartridge 60, is partly exposed through the slit 63a. The external shape of the housing 63 is not limited to a cylindrical shape, so that it may be a rectangular cylindrical shape. The housing 63 may be formed of a transparent synthetic resin material, such as acryl, or an opaque synthetic material or metallic material.

A holding portion 64 holding one end surface of the recording medium 10E is provided at the back surface of the cover 61. The holding portion 64 has a rotational shaft 64a at its center. The rotational shaft 64a is inserted into a center hole of the cover 61, and protrudes out of the cover 61. In addition, a small gear 65 functioning as a power transmission member is secured to an end of the rotational shaft 64a. Therefore, when the small gear 65 is rotated, the recording medium 10E can rotate around the rotational shaft 64a through the holding portion 64.

It is desirable that a rotational holding member (not shown) allowing rotation of the end of the recording medium 10E be provided at the top surface of the bottom portion 62. The rotational holding member may be, for example, a member that does not allow deflection of a shaft of the recording medium 10E during rotation, or a rotating base, or an annular groove where the other end surface of the recording medium 10E slides.

In the cartridge recording medium, since the recording surface (outer peripheral surface) is not directly exposed to the outside, the recording surface can be protected from, for example, scratches or dirt. Therefore, it is possible to reduce the occurrence of, for example, a recording error or a reproduction error.

Similarly to the above, the cartridge 60 including the recording medium 10E therein is mounted to a mounting portion (not shown), which is formed at, for example, a front surface, a back surface, a side surface of an electronic apparatus, such as a computer. Here, as shown in Fig. 8, in the mounting portion, a recording-medium driving device 40C is provided at a position at a side (Z1 direction in Fig. 8) of the housing 63.

The recording-medium driving device 40C has the same structure as the recording-medium driving device 40A, and has a moving member 45A which can freely move a movable member 48C, where a pickup 30C is mounted, in a longitudinal direction (Y direction) of the recording medium 10E.

The pickup 30C of this practical form is specifically for reproduction. It includes a light source 31 that generates reference light (laser light); a beam expander 32 that enlarges the reference light; a collimator lens 33 that converts the reference light into parallel light; a mirror actuator 34 that adjusts the tilting angle of a mirror 34a that changes the orientation of the reference light and that sets the angle of incidence of the reference light with respect to a recording surface of the recording medium 10E; a pinhole filter 35 that intercepts unnecessary light among reproduction light (diffraction light) that is diffracted by and that returns from the recording medium 10E; and an image pickup member 36, such as a CCD or CMOS image sensor, that reads information regarding the reproduction light (diffraction light) which has passed through the pinhole filter 35, and converts the reproduction light into an electrical signal. To make it possible for the pickup 30C to perform a recording operation, data light, formed by a spatial light modulator, is, along with the reference light, output towards the recording medium 10E.

Each member of the pickup 30C is disposed so that the reference light, reflected by the mirror 34a, and the reproduction light, which is diffracted by and returns from the recording medium 10E, can always pass through the slit 63a of the cartridge 60.

Therefore, even if the movable member 48C, having the pickup 30C mounted thereto, is moved in the Y direction, which is a movement direction, the reference light can illuminate any recording position on the recording medium 10E through the slit 63a. At the same time, the reproduction light from the recording medium 10E is output to the outside through the slit 63a, so that the information can be read at the image pickup member 36 through the pinhole filter 35.

As shown in Fig. 8, when the cartridge 60 is mounted in the mounting portion, the small gear 65, provided at the cover 61, engages a reduction gear 71, provided in the mounting portion. An output gear 72a of a stepping motor (rotational driving member) 72 engages the reduction gear 71. Therefore, when the stepping motor 72 rotates, its power is transmitted to the recording medium 10E through the output gear 72a, the reduction gear 71, and the small gear 65. By this, the recording medium 10E is rotated in a predetermined direction in the cartridge 60.

In this embodiment, when the stepping motor 72 is intermittently rotated in a predetermined step, the recording medium 10E is rotated at a predetermined angle pitch.

As shown in Fig. 9, in this recording medium 10E, data recording positions (books) with respect to the recording surface are formed in the peripheral direction at the predetermined angle pitch, and are formed at a predetermined pitch in the longitudinal direction. That is, the data recording positions (books) are recorded in a matrix with respect to the recording surface (outer peripheral surface) of the recording medium 10E.

Here, a collection of recording positions (books) arranged at the predetermined pitch angle in the peripheral direction is lines m (individually, line m1, line m2, line m3, ), and a collection of recording positions (books) arranged at the predetermined pitch in the longitudinal direction is columns n (individually, column n1, column n2, column n3, ).

In a state in which the rotation of the recording medium 10E is stopped, the recording positions (books) of data recorded on the recording surface of the recording medium 10E always oppose the slit 63a. Therefore, when the recording medium 10E is rotated at the predetermined angle pitch, the pickup 30C and any one of lines m on the recording surface always oppose each other through the slit 63a.

In the pickup 30C, the angle of the mirror actuator 34 is changed at a predetermined angle pitch along the direction of extension of the slit 63a. In addition, the mirror actuator 34 is stopped with every predetermined angle pitch, so that the image pickup member 36 is used every time it is stopped, thereby reading data.

By this, for example, it is possible to read out data recorded on all pages in which an angular multiplexing method is performed in a recording position (book) B1 positioned at the line m1 and the column n2.

Next, in the recording-medium driving device 40C, the stepping motor 72 is driven. In addition, the recording medium 10E is rotated in the peripheral direction by the predetermined angle pitch, so that the adjacent line m2 opposes the slit 63a. By repeating the same operations, data of all pages that are recorded on the recording position (book) B2 positioned at the line m2 and the column n2 can be read out.

Accordingly, by operating the pickup 30C while rotating the recording medium 10E in the peripheral direction by the predetermined angle pitch, data of all pages that are recorded on all the recording positions (books) B1, B2, , arranged in the column n2 and in the peripheral direction, can be read out.

In addition, in the recording-medium driving device 40C, when the reading out of the data of one peripheral portion in the column n2 is completed, the moving member 45A is driven to move the movable member 48C by the predetermined pitch in the Y direction. By similarly repeating the above-described operations, for example, data arranged on the adjacent column n3 and in the peripheral direction can be read out. By further repeating the above-described operations, all the data on the recording medium 10E can be read out.

It is possible to drive the moving member 45A, read all items of data arranged on line m1 and in the Y direction, rotate the recording medium 10E by a predetermined rotational angle, and read out all items of data arranged on the adjacent line m2 and in the Y direction. That is, it is possible to previously drive the moving member 45A to read out items of data arranged on one line m, and, then, drive the stepping motor 72 to read out items of data arranged on the next adjacent line m.

Although, in each of the practical forms, the case in which data recorded using the angular multiplexing method is read out is described, the recording method which can be performed on a recording medium according to the present invention is not limited to the angular multiplexing method. For example, the recording method may be a shift multiplexing method for performing multiplex recording in which recording is performed while shifting a recording position by a predetermined amount at a time.

In this shift multiplexing method, it is possible to continuously record data on a recording surface of a cylindrical recording medium so that the recording position is recorded along a spiral.

Such data can be read out while synchronizing rotation by the stepping motor 72 in the peripheral direction and linear movement by the moving member 45A in the Y direction. That is, by controlling the pickup 30 so as to move spirally along the recording medium, all data can be read out.

### Brief Description of the Drawings

Fig. 1 shows a basic structure of a recording medium according to an embodiment of the present invention, with Fig. 1A being a vertical sectional view of the recording medium, and Fig. 1B being a horizontal sectional view of the recording medium.
Fig. 2 shows a first practical form in which a cylindrical recording medium is used, with Fig. 2A showing a state prior to mounting, and Fig. 2B showing a state after mounting.
Fig. 3 shows a second practical form in which a cylindrical recording medium is used, with Fig. 3A showing a state before mounting, and Fig. 3B shows a state after mounting.
Fig. 4 is a perspective view of a recording-medium driving device of a first embodiment according to the present invention.
Fig. 5 is a perspective view of a recording-medium driving device of a second embodiment according to the present invention.
Fig. 6 is a front view of an example of an application of the recording-medium driving device shown in Fig. 4 as viewed from the direction of arrow 4 in Fig. 4.
Fig. 7 is an exploded perspective view of a cartridge recording medium serving as an example of an application of a cylindrical recording medium.
Fig. 8 is a perspective view of the recording medium shown in Fig. 7 and a recording-medium driving device thereof.
Fig. 9 is a schematic view of an internal structure of a pickup.

### Reference Numerals

- 10, 10A, 10B, 10C, 10D: recording medium
- 11: outer cylindrical member
- 12: inner cylindrical member
- 12a: externally threaded portion
- 13: gap
- 13a: externally threaded portion
- 14: optical recording material
- 15: sealing member
- 16: gripping portion
- 20: mounting portion
- 21: panel surface
- 22: insertion hole
- 23: mounting portion
- 23a: internally threaded portion
- 24: fitting portion
- 24a: internally threaded portion
- 30, 30A, 30B, 30C, 30D: pickup
- 31: light source
- 32: beam expander
- 33: collimator lens
- 34a: mirror
- 34: mirror actuator
- 35: pinhole filter
- 36: image pickup member
- 40, 40A, 40B: recording-medium driving device
- 41: rotational driving member
- 42: holding member
- 42A: holding cylindrical portion
- 42: Bbase
- 43: driving motor
- 45: moving member
- 46: guide shaft
- 47: screw shaft47
- 48, 48A, 48B: movable member
- 51, 52, 53, 54: moving member
- 60: cartridge
- 61: cover
- 62: bottom portion
- 63: housing
- 63a: slit
- 64: holding portion
- 65: small gear (power transmission member)
- 72: stepping motor (rotational driving member)

## Claims

1. A cylindrical recording medium comprising:
an outer cylindrical member where an outer peripheral surface is formed;
an inner cylindrical member where an inner peripheral surface is formed; and
an optical recording material sealed between the outer cylindrical member and the inner cylindrical member,
wherein at least one of the outer cylindrical member and inner cylindrical member is formed of a material having optical transparency.

2. The cylindrical recording medium according to Claim 1, wherein either one of the outer peripheral surface at the outer cylindrical member and the inner peripheral surface at the inner cylindrical member has a threaded portion.

3. A recording-medium driving device that records data onto a cylindrical recording medium, having an externally threaded portion formed at an inner peripheral surface or an outer peripheral surface, or that reproduces the data recorded on the recording medium, the recording-medium driving device comprising:
a fitting portion including a threaded portion that is different from and that engages the externally threaded portion, and
a pickup secured to a position opposing the inner peripheral surface or the outer peripheral surface of the recording medium.

4. A recording-medium driving device comprising:
a pickup that records information onto a cylindrical recording medium, or that reproduces the information recorded on the recording medium; and
a movable member where the pickup is mounted,
wherein a moving member that moves the movable member is provided at an inner portion or an outer portion of the recording medium.

5. The recording-medium driving device according to Claim 4, further comprising a rotational driving member that rotates the recording medium in a peripheral direction.

6. The recording-medium driving device according to either Claim 4 or Claim 5, wherein a plurality of the pickups that move along a recording surface of the recording medium are provided.

7. The recording-medium driving device according to Claim 5, wherein the rotational driving member includes a holding member that holds the recording medium, and a driving motor that rotates the holding member.

8. The recording-medium driving device according to Claim 7, wherein the driving motor is a stepping motor.

9. The recording-medium driving device according to any one of Claims 3 to 8, wherein the pickup includes a light source that emits reference light, a beam expander that expands the size of the reference light, a light scanner including a mirror that adjusts an angle of incidence of the reference light with respect to a surface of the recording medium as a result of reflecting the reference light that has passed through the beam expander, a light-converging lens that converges the reflected reference light and transmits the converged reference light to the recording medium, and an image pickup member that reads information of reproduction light returning from the recording medium and which converts the reproduction light into an electrical signal.

10. A recording medium of a cartridge-type comprising a housing that accommodates the recording medium of Claim 1, a cover that covers one end surface of the housing, and a bottom portion that covers another end surface of the housing, wherein:
the housing has a slit opposing a recording surface of the recording medium.

11. The cartridge-type recording medium according to Claim 10, which is rotatably held in the housing.

12. The cartridge-type recording medium according to Claim 11, wherein the cover is provided with a power transmission member that rotates the recording medium.

13. A recording-medium driving device for the cartridge-type recording medium of any one of Claims 10 to 12, the recording-medium driving device comprising:
a pickup that records information onto the recording medium accommodated in the cartridge, or that reproduces the information recorded on the recording medium; and
a moving member that moves the pickup in a predetermined movement direction,
wherein the pickup records the information onto or reproduces the information from the recording medium through a slit formed in the cartridge.

14. The recording-medium driving device according to Claim 13, wherein the pickup includes a light source that generates, at least, reference light, a beam expander that enlarges the reference light, a collimator lens that converts the reference light into parallel light, a mirror actuator that adjusts a tilting angle of a mirror and that sets an angle of incidence of the reference light with respect to the recording medium, a pinhole filter that intercepts unnecessary light among reproduction light that returns from the recording medium, and an image pickup member that reads the reproduction light, which has passed through the pinhole filter, and converts the reproduction light into an electrical signal.

15. The recording-medium driving device according to Claim 14, wherein the pickup further includes a spatial light modulator that generates data light including the information.

16. The recording-medium driving device according to any one of Claims 13 to 15, further comprising a rotational driving member that rotates the recording medium at a predetermined angle pitch in a peripheral direction.
